# EUROPEAN PATENT SPECIFICATION

(11) **EP 3 660 437 B1**
(45) Date of publication and mention of the grant of the patent: **14.07.2021**
(21) Application number: 18209140.5
(22) Date of filing: 29.11.2018
(51) Int. Cl.: F28F 3/08, B01D 1/22, C02F 1/00, F25B 39/02, F28F 3/10, F28F 9/02, F28F 13/08, F28D 9/00

(54) **A PLATE HEAT EXCHANGER AND A HEAT EXCHANGING PLATE FOR TREATING A FEED SUCH AS SEA WATER**
PLATTENWÄRMETAUSCHER UND WÄRMETAUSCHPLATTE ZUR BEHANDLUNG EINER ZUFUHR WIE ETWA MEERWASSER
ÉCHANGEUR DE CHALEUR À PLAQUES ET PLAQUE D'ÉCHANGE DE CHALEUR POUR TRAITER UN FLUX TEL QUE DE L' EAU DE MER

(43) Date of publication of application: 03.06.2020
(73) Proprietor: Alfa Laval Corporate AB, 221 00 Lund (SE)
(72) Inventor: BLOMGREN, Fredrik, 217 45 Malmö (SE)
(74) Representative: Alfa Laval Attorneys

(56) References cited:
- EP-A1- 0 411 123
- WO-A1-91/17406
- DE-A1-102005 010 341
- DE-U1- 8 617 776
- KR-B1- 101 146 105

## Description

The present invention relates to a plate heat exchanger according to the preamble of claim 1, and a heat exchanging plate according to the preamble of claim 15, for treating a feed such as sea water. KR 10-1146105 discloses a heat exchanger according to the preamble of claim 1.

### Introduction

Equipment for desalination of sea water, where one or several plate packages of heat exchanging plates form the main components in the process, have been manufactured since many years. One example of such a plate heat exchanger for desalination may be found in the international application WO 2006/104443 A1 assigned to Alfa Laval Corporate AB. The heat exchanger has an evaporation section, a separation section and a condensation section located in the plate interspaces of the heat exchanging plates. The advantage of the above-mentioned heat exchanger is that it does not need any container since the whole treatment of the sea water is performed in the plate interspaces of the plate package, i.e. evaporation, separation and condensation occur in the same plate package. This allows for a compact design.

This kind of heat exchanger operate by evaporating a feed, typically sea water, in the evaporation section, separating the feed into vaporized feed and brine droplets in the separation section and condensing the vaporized feed into a condensed feed in the condensation section. The evaporation, separation and condensation take place simultaneously in a continuous process, and the condensed feed is continuously removed from the condensation section via an outlet located in a lower region of the condensation section.

The technology described in WO 2006/104443 A1 is only using a single stage. However, the efficiency of the heat exchanger could be improved by using multiple stages. An example of a multiple stage heat exchanger for desalination is found in the not yet published European patent application number EP 18176540.5. Multiple stage heat exchanger utilise energy obtained from the condensation section of a first stage for evaporating feed of an evaporation section of a subsequent stage in the same plate package. The techniques described below may be used in both single and multistage desalination plants. The heat exchanging plate package comprises a plurality of heat exchanging plates, at least three, of substantially equal size which are placed successively face to face, typically along a horizontal direction. The plates form corrugations, i.e. ridges and valleys. The ridges and valleys are oppositely oriented on opposite plates and may together define a cross shaped pattern to increase the heat transfer through the plate by increase in the surface area of the plates and by causing the flow in the plate interspaces to be a turbulent flow. The corrugation implies that a ridge on the front side of the plate will define a valley on the rear side. Each heat exchanging plate defines substantially the full height and width of the heat exchanger package, and the horizontal direction constitutes the depth of the heat exchanger package. The edges of the heat exchanging plates are mutually sealed to establish parallel plate interspaces between the plates.

The heat exchanging plates define surfaces of different type and when assembled facing each other two kinds of plate interspaces, i.e. first and second plate interspaces, are provided in alternating order, i.e. a first plate interspace is located adjacent two second plate interspaces, except of course the first and the last plate interspace along the horizontal direction. The heat exchanging plates are typically made of thermally conductive corrosion resistant materials such as stainless steel, aluminium or titanium. This allows thermal contact through the plate by whereby fluid mixing is prevented.

The feed, which typically constitutes sea water, is introduced into an evaporation section where at least a part of the feed is vaporized. The vaporized part of the feed is led to a separation section which separates vaporized feed from a remaining part constituting non-vaporized feed. The separation section typically comprises rods, bars or corrugation etc. on which the non-vaporized feed gets trapped and is led out of the separation section. The vaporized feed is then led to the condensation section in which the vaporized feed to condensate using a cooling fluid on the opposite side of the heat exchanging plates. The condensed feed, typically fresh water, is led out of the heat exchanger package. The cooling fluid is typically a liquid such as naturally cool water, preferably sea water. Alternatively, other cooling medias may be used.

The evaporation section is defined by an area in the plate interspace in which the opposing first and second heat exchanging plates are sealed together along the bottom and the sides of the evaporation section. The evaporation section typically forms a substantially rectangular or square area. The sealing between the heat exchanging plates is typically made by a gasket, such as a rubber gasket, which is located between the plates in gasket grooves in the plate made for the purpose of holding the seal and to allow the seal to form a watertight barrier between the inside and the outside of the evaporation section. The upwardly oriented part of the evaporation section is open, allowing vaporized feed to enter the separation section and subsequently the condensation section. The directions referred herein are related to the orientation of the plate heat exchanger during normal use.

The feed enters the evaporation section of the first plate interspace via the feed inlet. The feed is a liquid, typically sea water. The feed inlet is located at the lower part of the evaporation section at one of the bottom corners of the evaporation section, where the bottom and the side meet. The inlet may preferably be formed as an opening in the side gasket adjacent the bottom of the evaporation section.

It has been realized that the saline sea water entering the evaporation section at the inlet at the corner of the evaporation section in some cases does not distribute well over the surface of the part of the heat exchanging plates comprising the evaporation section but tend to remain adjacent the inlet. This may lead to dry areas in the evaporation section which makes the heat exchanger less effective.

It is thus an object of the present invention to find technologies for distributing the sea water over the complete area of the evaporation section of the heat exchanging plates.

### Summary of the invention

According to a first aspect, the present invention relates to plate heat exchanger for treatment of a feed, the plate heat exchanger including a plate package comprising a plurality of heat exchanging plate arranged in a successive order forming first plate interspaces and second plate interspaces in an alternating order in the plate package, each first plate interspace defines an evaporation section for evaporating the feed, the evaporation section extends in a longitudinal direction between an upper border fluidly connecting the evaporation section to a first separation section and a lower border at which opposing heat exchanging plates are sealed together, the evaporation section further extends in a transversal direction between a first side border and a second side border at which side borders opposing heat exchanging plates are sealed together, the evaporation section defines:
a feed inlet located adjacent the lower border for introducing the feed in liquid form into the evaporation section,
a heat exchanging zone adjacent the upper border, the heat exchanging zone being formed by ridges and valleys in the opposing heat exchanging plates which are arranged such that opposing ridges of the opposing heat exchanging plates abut each other,
a passage located between the lower border and the heat exchanging zone and extending from the feed inlet in the transversal direction for receiving the feed from the feed inlet and allowing a uniform distribution of the feed over the heat exchanging zone, and
a transition zone separating the heat exchanging zone and the passage, the maximum distance between opposing heat exchanging plates in the transition zone being smaller than the maximum distance between opposing heat exchanging plates in the passage and in the heat exchanging zone.

The first interspace is generally known as the process interspace. The top parts of the ridges of opposing plates in the first plate interspaces will contact at several contact points in the corrugated region constituting the heat exchanging zone of the evaporation section. The points of contact are where the ridges of two opposing heat exchange plates meet. Conversely, where two valleys are opposing each other a spacing is defined between the opposing heat exchanger plates in the first plate interspaces. In the second interspaces, the ridges defined in the first plate interspaces will form valleys.

The feed inlet is located near the lower border in order to allow the liquid feed to flow into the evaporation region and flow in an upwards direction while being evaporated in the heat exchanging zone. The lower border and the side borders are sealed in order to contain the liquid feed, whereas the upwards facing border is open to allow the evaporated feed to enter the separation section. The directions upward, downwards etc are related to the orientation of the plate package during operation.

The passage forms an unobstructed flow channel from the feed inlet at the lower border of the evaporation section and extends in the transversal direction. The passage is substantially straight and extend in a substantially horizontal direction, e.g. at a slight angle, along the lower border in order to allow the liquid feed from the inlet to pass relatively freely and distribute along the lower border. In the passage the flow resistance is reduced compared to the heat exchanging zone as the liquid feed may flow straight whereas the liquid in the heat exchanging zone must flow in a curved way due to the pattern defined by the opposing heat exchanging plates. The passage will thus substantially fill with liquid.

The liquid may then flow from the passage into the transition zone along the lower border and from the transition zone to the heat exchanging zone, thus ensuring that the heat exchanging zone will be sufficiently supplied with liquid feed between the first and second side border allowing a more or less uniform distribution of the feed over the heat exchanging zone and avoid that some parts of the heat exchanging zone will remain dry and unused.

The transition zone will define a flow restriction or throttling between the passage and the heat exchanging zone. In this way, it may be ensured that the passage remains filled with liquid feed along its full length to ensure a uniform distribution of the feed.

According to a further embodiment of the first aspect the maximum distance between opposing heat exchanging plates in the transition zone is between 10% to 45% of the maximum distance between opposing heat exchanging plates in the passage.

In this way a suitable flow restriction is achieved for allowing a uniform distribution of the flow between the passage and the heat exchanging zone

According to a further embodiment of the first aspect the ridges and valleys of opposing heat exchanging plates form a cross shaped pattern in the heat exchanging zone.

A cross shaped pattern may be beneficial for increasing the turbulence.

According to a further embodiment of the first aspect the maximum distance between opposing heat exchanging plates being substantially equal in the passage and in the opposing valleys of the heat exchanging zone.

By maximizing the depth/height of the passage, the flow of feed in the passage is maximized and which will contribute to a uniform distribution of the feed in the heat transfer region.

According to a further embodiment of the first aspect the passage extending substantially between the first side border and the second side border.

In order to ensure the uniform distribution of the flow along the complete width of the heat exchanging zone, the passage preferably extends over the complete width of the heat exchanging zone, i.e. by extending the passage the entire length between the first side border and the second side border

According to a further embodiment of the first aspect at least one of the first and second plate interspaces comprises a first condensation section arranged to permit condensation of at least a part of the evaporated feed.

In order to achieve both evaporation and condensation in the same plate package, a condensation section may be used. The condensation section is communicating with the separation section. In this way a three-in-one plate package may be achieved in which evaporation, separation and condensation is achieved in the same plate package.

According to a further embodiment of the first aspect the maximum width of the passage is at least equal to the maximum distance between opposing heat exchanging plates at the passage.

The flow area of the passage will thus have a suitable shape for maximizing the flow.

According to a further embodiment of the first aspect the evaporation section in the first plate interspace is facing a second condensation section in the second plate interspace.

In this way a multi stage heat exchanger may be realized. The second condensation section forms part of another process stage. The multi stage heat exchanger uses the heat of condensation of another process stage to evaporate the feed in the present process stage. The evaporation section and the second condensation section are thereby separated by the heat exchange plate. The evaporation section of the other stage may be heated by a heating fluid.

According to a further embodiment of the first aspect the second condensation section in the second plate interspace defines a condensate outlet located below the feed inlet of the evaporation section in the first plate interspace, the passage defines a cross flow zone located between the evaporation section in the first plate interspace and the condensate outlet in the second plate interspace, the maximum distance between opposing heat exchanging plates in the passage being smaller in the cross flow zone compared to outside the cross flow zone.

As the condensate outlet should be located at the lowermost point in the condensation section, it is typically situated below the feed inlet of the evaporation section in the first plate interspace opposite the second condensation section in the second plate interspace. The passage extending transversally from the feed inlet in the first plate interspace will interfere with the flow of fresh water from the condensation section to the outlet. The heat exchanging plates in the second plate interspace at the passage must consequently not abut since this would form a completely blockage of fresh water to the outlet. The passage must thus form a cross flow zone between the heat exchanging zone and the outlet where the plates are spaced apart in both plate interspaces in order to allow both liquid feed to pass in the first plate interspace and the fresh water flow in the second plate interspace. The width of the cross flow zone may be larger than the width of the passage to allow for the flow area to the substantially unaltered.

According to a further embodiment of the first aspect the maximum distance between opposing heat exchanging plates in the cross flow zone is about 40% to 60%, such as 50%, of the maximum distance between opposing exchanging plates in the passage outside the cross flow zone

In this way the cross flow of feed and fresh water will be allowed.

According to a further embodiment of the first aspect the width of the cross flow zone is about ¼ to ¾, such as ½, of the length of the cross flow zone.

In this way the flow of fresh water will not be substantially obstructed. The width of the cross flow zone and passage is hereby understood to extend in the longitudinal direction of the plate whereas the length is understood to extend in the transversal direction of the plate.

According to a further embodiment of the first aspect the width of the passage outside the cross flow zone is about 20% to 80% such as 50%, of the width of the cross flow zone.

The width of the cross flow zone may be larger than the width of the passage to allow for the flow area to the substantially unaltered.

According to a further embodiment of the first aspect the lower border and the side borders of the evaporation section are sealed by a gasket.

By using a gasket, a secure sealing is achieved while it is still possible to separate the plates for maintenance purposes.

According to a further embodiment of the first aspect the inlet is centrally located in the plate package.

In this way the evaporation section may extend on both sides of the inlet. According to a second aspect, the present invention relates to plate for a plate heat exchanger for treatment of a feed, the plate defines an evaporation section for evaporating the feed, the evaporation section extends in a longitudinal direction between an upper border fluidly connecting the evaporation section to a first separation section and a lower border at which opposing heat exchanging plates are sealed together, the evaporation section further extends in a transversal direction between a first side border and a second side border at which side borders opposing heat exchanging plates are sealed together, the evaporation section defines:
a feed inlet located adjacent the lower border for introducing the feed in liquid form into the evaporation section,
a heat exchanging zone adjacent the upper border, the heat exchanging zone being formed by ridges and valleys in the heat exchanging plate which are arranged such that, when arranged opposite an identical plate which has been flipped about the longitudinal direction, opposing ridges of the opposing heat exchanging plates will abut each other and form a cross shaped pattern,
a passage located between the lower border and the heat exchanging zone and extending from the feed inlet in the transversal direction for receiving the feed from the feed inlet and allowing a uniform distribution of the feed over the heat exchanging zone, and
a transition zone separating the heat exchanging zone and the passage, the maximum press depth of the plate in the transition zone being smaller than the maximum press depth of the plate in the passage and in the heat exchanging zone.

The plate according to the second aspect is preferably used together with the plate heat exchanger according to the first aspect.

### Brief description of the drawings

Fig. 1 shows a plate of a multi stage plate heat exchanger for desalination.
Fig. 2 shows a closeup of the evaporation section of the plate.
Fig. 3 shows a perspective view of the passage on the plate.
Fig. 4 shows a perspective view of the passage in-between two plates.
Fig. 5 shows a perspective view of the passage and two gaskets.
Fig. 6 shows a perspective view of the cross flow zone of the plate.
Fig. 7 shows a cross-section view of the passage in-between two plates at the passage.
Fig. 8 shows a perspective view of a plate package comprising four plates.
Fig. 9 shows a perspective view of a plate package comprising four plates.
Fig. 10 shows a cross-section view of a plate package comprising four plates.

### Detailed description of the drawings

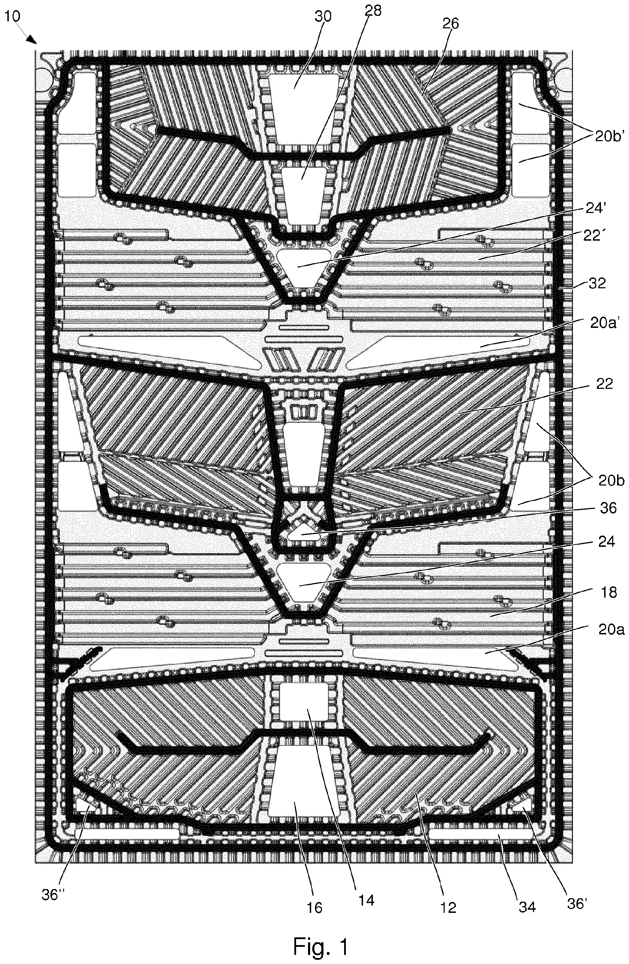

Fig. 1 shows a rear view of a plate 10 for a multi stage plate heat exchanger for desalination of sea water. The plate 10 is intended to face another similar heat exchanging plate and form part of a plate package. The present view is of the rear side of the plate which is intended to form part of the second plate interspace. The plate 10 defines a heating medium section 12 located at the bottom of the plate 10. The heating medium section 12 having a heating medium inlet 14 for introducing heating medium into the heating medium section 12 and a heating medium outlet 16 for allowing the heating medium out of the heating medium section 12 when it has released heat to the evaporation section of the first stage located opposite the heating medium section 12 in the first plate interspace (not shown here). The heating medium may be jacket water from an engine.

The evaporated sea water from the evaporation section of the first stage (not visible since it is located opposite the heating medium section 12) enters a separation section 18 in which non-evaporated parts of the feed (such as droplets) are separated and lead out of the plate package. The evaporated part of the feed may flow through the plate to the first plate interspace using apertures 20a and 20b and subsequently enters a condensation section 22 of the first stage. The condensation section 22 is located opposite an evaporation section of the second stage. The evaporated feed entering the condensation section 22 will condensate as the heat energy is absorbed by the feed in the opposite evaporation section (not shown). The condensed feed is flowing out via the fresh water outlet 24.

The evaporated feed from the evaporation section of a second stage (not visible here since it is located opposite the condensation section 22 in the opposite plate interspace) may flow between the first plate interspace and the second plate interspace via apertures 20a' and 20b'. The evaporated feed is received by a condensation section of the second stage located in the opposite plate interspace. Condensed fresh water from the condensation section of the second stage is collected via the fresh water outlet 24'

The plate 10 further defines a cooling medium section 26 having a cooling medium inlet 28 for introducing cooling medium into the cooling medium section 26 and a cooling medium outlet 30 for allowing the cooling medium out of the cooling medium section 26 when it has absorbed heat from the condensation section of the second stage in the first plate interspace located opposite the cooling medium section 12. The cooling medium may be sea water.

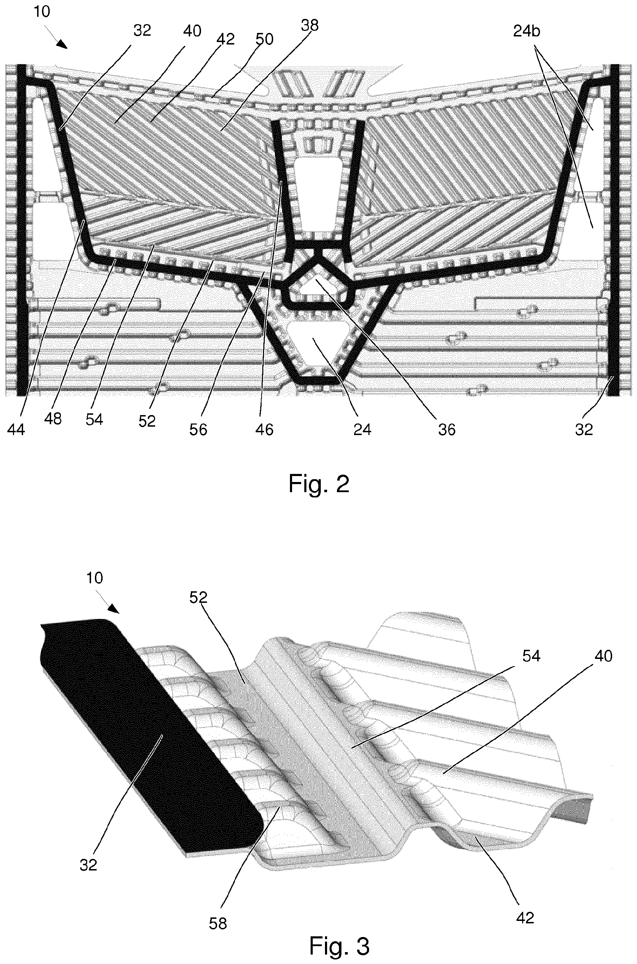

Opposing heat exchanger plates are sealed together via a gasket 32 which also defines the sections and separates the stages. Excessive non-evaporated water from the separation section is led out via the brine outlet 34. The apertures 36 36' 36" constitutes feed inlet for the evaporation sections located on the opposite side of the condensation section 22 and heating section 12 which will be elaborated further below. The heating medium inlet 14, the heating medium outlet 16, the fresh water outlets 24 24', the cooling medium inlet 28, the cooling medium outlet 30 and the feed inlet 36 are formed on a central axis of the heat exchanging plate 10. The central axis in the present embodiment essentially divides the heat exchange plate 10 into functionally identical left and right parts. Fig. 2 shows a front view of a part of the heat exchanging plate 10 showing the evaporation section 38 of the second stage located on the plate 10 in the second plate interspace opposite the condensation section of the first stage. The evaporation section 38 is divided into a left part and a right part which are functionally identical. The following description will for simplicity reasons focus on the left part. The evaporation section 38 defines a heat exchange zone in which the plate 10 comprises ridges 40 and valleys 42. The two opposing heat exchanger plates in the first plate interspace are flipped over in relation to each other such that opposing ridges and valleys form a cross shaped pattern in relation to each other. Opposing ridges will abut each other and opposing valleys will define a flow space themselves. This pattern generates a turbulent flow and increases the heat transfer through the plate 10. This part of the evaporation section thus acts as a heat exchanging zone with the opposite condensation section.

The evaporation section 38 defines a first side border 44, an opposite second side border 46 located adjacent the central axis of the plate 10, and a lower border 48. The opposing heat exchanger plates being sealed together at the first side border 44, second side border 46 and lower border 48 by means of a gasket 32. The evaporation section 38 further defines the feed inlet 38 arranged at the second side border 46 adjacent the lower border 48 of the evaporation section for introducing liquid feed into the evaporation section 38. The liquid feed, typically sea water, enters the first plate interspace via a small aperture in the plate (not shown) and enters the evaporation section 38 via apertures in the gasket 32. The top border 50 of the evaporation section 38 is open allowing evaporated feed to enter the separation section. When in operation, the separation section must be located above the corresponding evaporation section and the condensation section must be located above the corresponding separation section.

The liquid feed entering the evaporation section 38 at the feed inlet 38 is led via a passage 52 towards the first side border 44 of the evaporation section 38 between the lower border and the heat exchanging zone. The passage 52 extends between the sides 44 46. The passage 52 defines a press depth substantially equal to that of a valley in the heat exchanging zone. The passage 52 thus defines a large flow area due to the press depth and reduced turbulence since it is substantially straight.

As the passage 52 is substantially straight and extends along the lower border, the incoming liquid feed will encounter a low flow resistance by flowing through the passage 52, compared to flowing through the heat exchanging zone. An increased amount of liquid feed will thus flow towards the first side border 44 when the passage 52 is provided.

In order to ensure that a large portion of the inflowing liquid feed flows in the passage towards the first side border 44 instead of entering the heat exchanging zone near the second side border 46, a transition zone 54 is located between the passage 52 and the heat exchanging zone. In the transition zone, the distance between opposing plates are reduced compared to the passage. The transition zone defines a reduced flow area between the passage 52 and the heat exchanging zone which allows a greater part of the flow to proceed towards the first side border 44.

The passage 52 defines a cross flow zone 56 between the heat exchanging zone and the outlet 24 of the condensation section in the second plate interspace in order to allow the flow of fresh water on the opposite condensation section in the second plate interspace to enter the fresh water outlet 24 and not be obstructed by the passage. In case the passage 52 with maximum spacing between the opposing plates in the second plate interspace would extend the complete distance between the flow inlet 38 and the first side border 44, it would mean that in the second plate interspace, there would be a blockage between the condensation section and the fresh water outlet 24. Instead, the cross flow zone 56 provides a distance between opposing plates both in the first plate interspace and in the second plate interspace thus allowing a transversal flow of liquid feed from the feed inlet 36 through the passage 52 in the first plate interspace and at the same time allowing a cross flow of fresh water in the longitudinal direction from the heat exchanging zone in the condensation section in the second plate interspace to the fresh water outlet 24 in the second plate interspace.

Fig. 3 shows a perspective view of the passage 52 on the plate 10. The gasket 32 is held in place by corrugations 58. The passage 52 extend adjacent the corrugations 58. The transition zone 54 is located between the passage 52 and the heat exchanging zone of the evaporation section formed by the ridges 40 and valleys 42.

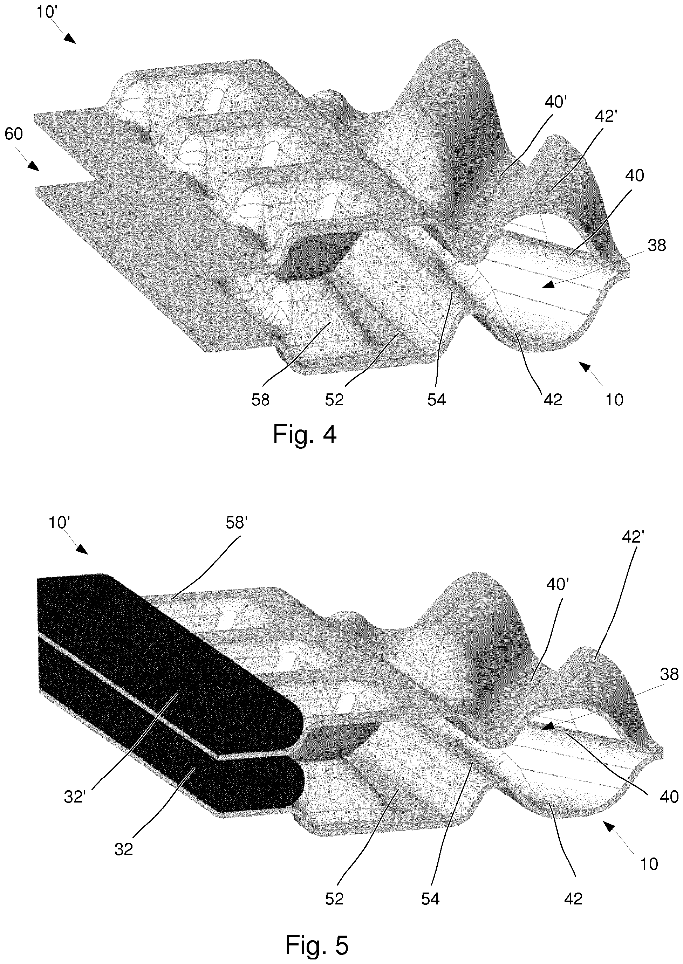

Fig. 4 shows a perspective view of the passage 52 in-between two plates 10 10'. The two plates 10 10' define a first plate interspace 60 in-between themselves and an evaporation section in the first plate interspace 60. At the opposing ridges 40 40', the plates 10 10' will abut at a contact point, whereas at opposing valleys 42 42' a maximum distance between the plates 10 10' is achieved. Correspondingly, at the passage 52 52', the maximum distance between the plates 10 10' is achieved as well.

Fig. 5 shows a perspective view of the passage 52 in-between two plates 10 10'. This figure is identical to Fig. 4 except that it also shows an additional gasket 32' intended to seal between the second plate 10' and a third plate is shown.

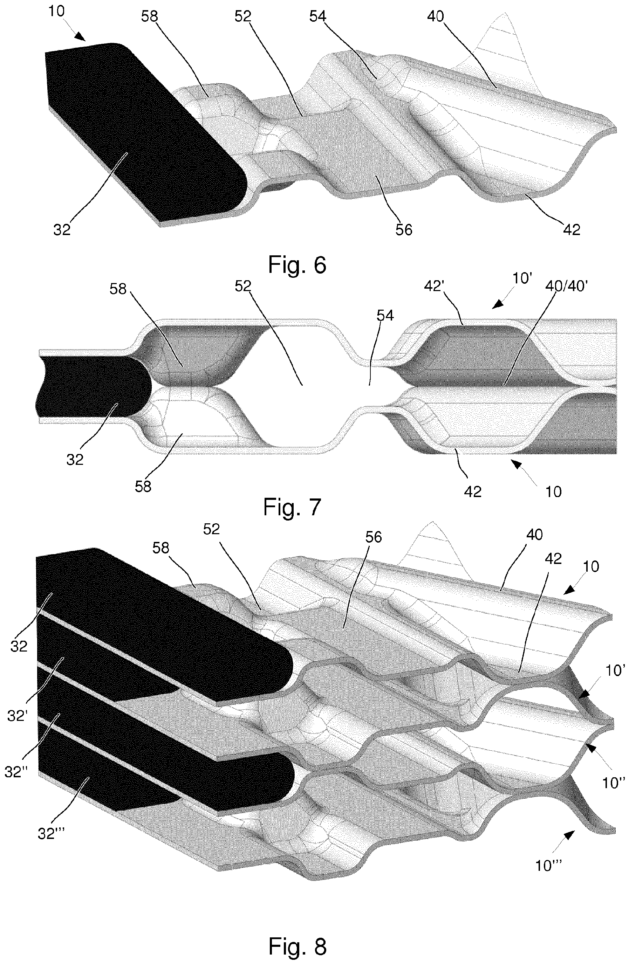

Fig. 6 shows a perspective view of the cross flow zone 56 of the plate 10. Also shown is the transition zone 54 which in the present embodiment defines a smaller spacing between the opposing plates than the cross flow zone 56. The part of the passage 52 outside the cross flow zone 56 is also visible. The cross flow zone 56 defines a reduced press depth compared to the passage.

Fig. 7 shows a cross section view of the passage 52 in-between two plates 10 10' at the location of the passage 52 outside the cross flow zone. Also shown is the transition zone 54.

Fig. 8 shows a perspective view of a plate package comprising four plates 10 10' 10" 10"'. As can be seen, the gaskets 32 and 32" extend the full way providing the lower border of the evaporation section at the bottom whereas the gaskets 32' and 32''' allows a cross flow of fresh water to the fresh water outlet. The cross flow zone 56 allowing the opposing plates to be spaced apart both on the front surface and the rear surface for allowing a flow of liquid in both the first plate interspace and the second plate interspace.

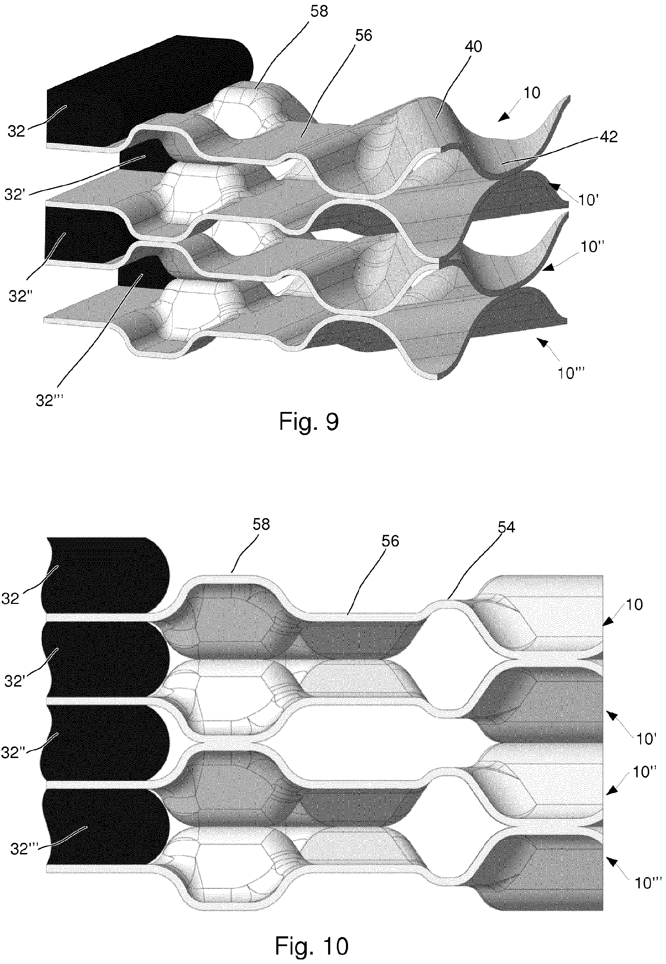

Fig. 9 shows another perspective view of a plate package comprising four plates 10 10' 10" 10"'.

Fig. 10 shows a cross section view of a plate package comprising four plates 10 10' 10" 10''' at the location of the cross flow zone 56. Also shown is the transition zone 54.

## Claims

1. A plate heat exchanger for treatment of a feed, the plate heat exchanger including a plate package comprising a plurality of heat exchanging plates arranged in a successive order forming first plate interspaces and second plate interspaces in an alternating order in the plate package, each first plate interspace defines an evaporation section for evaporating the feed, the evaporation section extends in a longitudinal direction between an upper border fluidly connecting the evaporation section to a first separation section and a lower border at which opposing heat exchanging plates are sealed together, the evaporation section further extends in a transversal direction between a first side border and a second side border at which side borders opposing heat exchanging plates are sealed together, the evaporation section defines:
a feed inlet located adjacent the lower border for introducing the feed in liquid form into the evaporation section,
a heat exchanging zone adjacent the upper border, the heat exchanging zone being formed by ridges and valleys in the opposing heat exchanging plates which are arranged such that opposing ridges of the opposing heat exchanging plates abut each other,
a passage located between the lower border and the heat exchanging zone and extending from the feed inlet in the transversal direction for receiving the feed from the feed inlet and allowing a uniform distribution of the feed over the heat exchanging zone, and **characterised by**
a transition zone separating the heat exchanging zone and the passage, the maximum distance between opposing heat exchanging plates in the transition zone being smaller than the maximum distance between opposing heat exchanging plates in the passage and in the heat exchanging zone.

2. The plate heat exchanger according to claim 1, wherein the maximum distance between opposing heat exchanging plates in the transition zone is between 10% and 45% of the maximum distance between opposing heat exchanging plates in the passage.

3. The plate heat exchanger according to any of the preceding claims, wherein the ridges and valleys of opposing heat exchanging plates form a cross shaped pattern in the heat exchanging zone.

4. The plate heat exchanger according to any of the preceding claims, wherein the maximum distance between opposing heat exchanging plates being substantially equal in the passage and in the opposing valleys of the heat exchanging zone.

5. The plate heat exchanger according to any of the preceding claims, wherein the passage extending substantially between the first side border and the second side border.

6. The plate heat exchanger according to any of the preceding claims, wherein at least one of the first and second plate interspaces comprises a first condensation section arranged to permit condensation of at least a part of the evaporated feed.

7. The plate heat exchanger according to any of the preceding claims, wherein the maximum width of the passage is at least equal to the maximum distance between opposing heat exchanging plates at the passage.

8. The plate heat exchanger according to any of the preceding claims, wherein the evaporation section in the first plate interspace is facing a second condensation section in the second plate interspace.

9. The plate heat exchanger according to claim 8, wherein the second condensation section in the second plate interspace defines a condensate outlet located below the feed inlet of the evaporation section in the first plate interspace, the passage defines a cross flow zone located between the evaporation section in the first plate interspace and the condensate outlet in the second plate interspace, the maximum distance between opposing heat exchanging plates in the passage being smaller in the cross flow zone compared to outside the cross flow zone.

10. The plate heat exchanger according to claim 9, wherein the maximum distance between opposing heat exchanging plates in the cross flow zone is about 40%-60%, such as 50%, of the maximum distance between opposing exchanging plates in the passage outside the cross flow zone.

11. The plate heat exchanger according to any of the claims 9-10, wherein the width of the passage outside the cross flow zone is about 20% to 80%, such as 50%, of the width of the cross flow zone.

12. The plate heat exchanger according to any of the claims 9-11, wherein the width of the cross flow zone is about ¼ to ¾, such as ½, of the length of the cross flow zone.

13. The plate heat exchanger according to any of the preceding claims, wherein the lower border and the side borders of the evaporation section are sealed by a gasket.

14. The plate heat exchanger according to any of the preceding claims, wherein the feed inlet is centrally located in the plate package.

15. A plate for a plate heat exchanger for treatment of a feed, the plate defines an evaporation section for evaporating the feed, the evaporation section extends in a longitudinal direction between an upper border fluidly connecting the evaporation section to a first separation section and a lower border at which opposing heat exchanging plates are sealed together, the evaporation section further extends in a transversal direction between a first side border and a second side border at which side borders opposing heat exchanging plates are sealed together, the evaporation section defines:
a feed inlet located adjacent the lower border for introducing the feed in liquid form into the evaporation section,
a heat exchanging zone adjacent the upper border, the heat exchanging zone being formed by ridges and valleys in the heat exchanging plate which are arranged such that, when arranged opposite an identical plate which has been flipped about the longitudinal direction, opposing ridges of the opposing heat exchanging plates will abut each other and form a cross shaped pattern,
a passage located between the lower border and the heat exchanging zone and extending from the feed inlet in the transversal direction for receiving the feed from the feed inlet and allowing a uniform distribution of the feed over the heat exchanging zone, and **characterised by**
a transition zone separating the heat exchanging zone and the passage, the maximum press depth of the plate in the transition zone being smaller than the maximum press depth of the plate in the passage and in the heat exchanging zone.

## Patentansprüche

1. Plattenwärmetauscher zur Behandlung eines Einsatzstoffs, wobei der Plattenwärmetauscher ein Plattenpaket einschließt, das eine Vielzahl von Wärmeaustauschplatten umfasst, die in einer aufeinanderfolgenden Reihenfolge angeordnet sind, wobei sie im Plattenpaket erste Plattenzwischenräume und zweite Plattenzwischenräume in abwechselnder Reihenfolge bilden, wobei jeder erste Plattenzwischenraum einen Verdampfungsabschnitt zum Verdampfen des Einsatzstoffs definiert, wobei der Verdampfungsabschnitt sich in einer Längsrichtung zwischen einem oberen Rand, der den Verdampfungsabschnitt mit einem ersten Trennabschnitt fluidisch verbindet, und einem unteren Rand, an dem gegenüberliegende Wärmeaustauschplatten miteinander versiegelt sind, erstreckt, wobei der Verdampfungsabschnitt sich ferner in einer Querrichtung zwischen einem ersten seitlichen Rand und einem zweiten seitlichen Rand erstreckt, wobei an diesen seitlichen Rändern gegenüberliegende Wärmeaustauschplatten miteinander versiegelt sind, wobei der Verdampfungsabschnitt definiert:
einen angrenzend an den unteren Rand angeordneten Einsatzstoffeinlass zum Einleiten des Einsatzstoffs in flüssiger Form in den Verdampfungsabschnitt,
eine Wärmeaustauschzone, die an den oberen Rand angrenzt, wobei die Wärmeaustauschzone durch Rippen und Täler in den gegenüberliegenden Wärmeaustauschplatten gebildet wird, die so angeordnet sind, dass gegenüberliegende Rippen der gegenüberliegenden Wärmeaustauschplatten aneinanderstoßen,
einen Durchlass, der zwischen dem unteren Rand und der Wärmeaustauschzone angeordnet ist und sich vom Einsatzstoffeinlass in der Querrichtung erstreckt, um den Einsatzstoff aus dem Einsatzstoffeinlass aufzunehmen und eine gleichmäßige Verteilung des Einsatzstoffs über die Wärmeaustauschzone zu ermöglichen, und **gekennzeichnet durch**:
eine Übergangszone, welche die Wärmeaustauschzone und den Durchlass trennt, wobei der maximale Abstand zwischen gegenüberliegenden Wärmeaustauschplatten in der Übergangszone kleiner ist als der maximale Abstand zwischen gegenüberliegenden Wärmeaustauschplatten im Durchlass und in der Wärmeaustauschzone.

2. Plattenwärmetauscher nach Anspruch 1, wobei der maximale Abstand zwischen gegenüberliegenden Wärmeaustauschplatten in der Übergangszone zwischen 10% und 45% des maximalen Abstands zwischen gegenüberliegenden Wärmeaustauschplatten im Durchlass beträgt.

3. Plattenwärmetauscher nach einem der vorhergehenden Ansprüche, wobei die Rippen und Täler von gegenüberliegenden Wärmeaustauschplatten ein kreuzförmiges Muster in der Wärmeaustauschzone bilden.

4. Plattenwärmetauscher nach einem der vorhergehenden Ansprüche, wobei der maximale Abstand zwischen gegenüberliegenden Wärmeaustauschplatten im Durchlass und in den gegenüberliegenden Tälern der Wärmeaustauschzone im Wesentlichen gleich ist.

5. Plattenwärmetauscher nach einem der vorhergehenden Ansprüche, wobei der Durchlass sich im Wesentlichen zwischen dem ersten seitlichen Rand und dem zweiten seitlichen Rand erstreckt.

6. Plattenwärmetauscher nach einem der vorhergehenden Ansprüche, wobei mindestens einer der ersten und zweiten Plattenzwischenräume einen ersten Kondensationsabschnitt umfasst, der dafür eingerichtet ist, eine Kondensation mindestens eines Teils des verdampften Einsatzstoffs zu ermöglichen.

7. Plattenwärmetauscher nach einem der vorhergehenden Ansprüche, wobei die maximale Breite des Durchlasses mindestens gleich dem maximalen Abstand zwischen gegenüberliegenden Wärmeaustauschplatten am Durchlass ist.

8. Plattenwärmetauscher nach einem der vorhergehenden Ansprüche, wobei der Verdampfungsabschnitt im ersten Plattenzwischenraum einem zweiten Kondensationsabschnitt im zweiten Plattenzwischenraum zugewandt ist.

9. Plattenwärmetauscher nach Anspruch 8, wobei der zweite Kondensationsabschnitt im zweiten Plattenzwischenraum einen Kondensatauslass definiert, der unterhalb des Einsatzstoffeinlasses des Verdampfungsabschnitts im ersten Plattenzwischenraum angeordnet ist, wobei der Durchlass eine Querstromzone definiert, die zwischen dem Verdampfungsabschnitt im ersten Plattenzwischenraum und dem Kondensatauslass im zweiten Plattenzwischenraum angeordnet ist, wobei der maximale Abstand zwischen gegenüberliegenden Wärmetauschplatten im Durchlass in der Querstromzone kleiner ist, verglichen mit außerhalb der Querstromzone.

10. Plattenwärmetauscher nach Anspruch 9, wobei der maximale Abstand zwischen gegenüberliegenden Wärmeaustauschplatten in der Querstromzone etwa 40% bis 60%, wie zum Beispiel 50%, des maximalen Abstands zwischen gegenüberliegenden Wärmeaustauschplatten im Durchlass außerhalb der Querstromzone beträgt.

11. Plattenwärmetauscher nach einem der Ansprüche 9 bis 10, wobei die Breite des Durchlasses außerhalb der Querstromzone etwa 20% bis 80%, wie zum Beispiel 50%, der Breite der Querstromzone beträgt.

12. Plattenwärmetauscher nach einem der Ansprüche 9 bis 11, wobei die Breite der Querstromzone etwa ¼ bis ¾, wie zum Beispiel ½, der Länge der Querstromzone beträgt.

13. Plattenwärmetauscher nach einem der vorhergehenden Ansprüche, wobei der untere Rand und die seitlichen Ränder des Verdampfungsabschnitts durch eine Dichtung abgedichtet sind.

14. Plattenwärmetauscher nach einem der vorhergehenden Ansprüche, wobei der Einsatzstoffeinlass mittig im Plattenpaket angeordnet ist.

15. Platte für einen Plattenwärmetauscher zur Behandlung eines Einsatzstoffs, wobei die Platte einen Verdampfungsabschnitt zum Verdampfen des Einsatzstoffs definiert, wobei der Verdampfungsabschnitt sich in einer Längsrichtung zwischen einem oberen Rand, der den Verdampfungsabschnitt mit einem ersten Trennabschnitt fluidisch verbindet, und einem unteren Rand, an dem gegenüberliegende Wärmeaustauschplatten miteinander abgedichtet sind, erstreckt, wobei der Verdampfungsabschnitt sich ferner in einer Querrichtung zwischen einem ersten seitlichen Rand und einem zweiten seitlichen Rand, wobei an diesen seitlichen Rändern gegenüberliegende Wärmeaustauschplatten miteinander abgedichtet sind, erstreckt, wobei der Verdampfungsabschnitt definiert:
einen angrenzend an den unteren Rand angeordneten Einsatzstoffeinlass zum Einleiten des Einsatzstoffs in flüssiger Form in den Verdampfungsabschnitt,
eine an den oberen Rand angrenzende Wärmeaustauschzone, wobei die Wärmeaustauschzone durch Rippen und Täler in der Wärmeaustauschplatte gebildet wird, die so angeordnet sind, dass, wenn sie gegenüber einer identischen Platte angeordnet sind, die um die Längsrichtung umgedreht wurde, gegenüberliegende Rippen der gegenüberliegenden Wärmeaustauschplatten aneinanderstoßen und ein kreuzförmiges Muster bilden werden,
einen Durchlass, der zwischen dem unteren Rand und der Wärmeaustauschzone angeordnet ist und sich vom Einsatzstoffeinlass in der Querrichtung erstreckt, um den Einsatzstoff aus dem Einsatzstoffeinlass aufzunehmen und eine gleichmäßige Verteilung des Einsatzstoffs über die Wärmeaustauschzone zu ermöglichen, und **gekennzeichnet durch**:
eine Übergangszone, welche die Wärmeaustauschzone und den Durchlass trennt, wobei die maximale Presstiefe der Platte in der Übergangszone kleiner ist als die maximale Presstiefe der Platte im Durchlass und in der Wärmeaustauschzone.

## Revendications

1. Échangeur de chaleur à plaques pour le traitement d'une alimentation, l'échangeur de chaleur à plaques incluant un ensemble de plaques comprenant une pluralité de plaques d'échange de chaleur agencées dans un ordre successif formant de premiers interstices de plaque et de seconds interstices de plaque dans un ordre alternatif dans l'ensemble de plaques, chaque premier interstice de plaque définissant une section d'évaporation pour permettre l'évaporation de l'alimentation, la section d'évaporation s'étendant dans une direction longitudinale entre une limite supérieure, qui relie de manière fluidique la section d'évaporation avec une première section de séparation, et une limite inférieure au niveau de laquelle des plaques d'échange de chaleur opposées sont scellées ensemble, la section d'évaporation s'étendant en outre dans une direction transversale entre une première limite latérale et une seconde limite latérale, limites latérales au niveau desquelles des plaques d'échange de chaleur opposées sont scellées ensemble, la section d'évaporation définissant :
une entrée d'alimentation située de manière adjacente à la limite inférieure pour introduire l'alimentation sous une forme liquide dans la section d'évaporation,
une zone d'échange de chaleur adjacente à la limite supérieure, la zone d'échange de chaleur étant formée par des crêtes et des vallées dans les plaques d'échange de chaleur opposées qui sont agencées de sorte que des crêtes opposées des plaques d'échange de chaleur opposées viennent en butée les unes contre les autres,
un passage situé entre la limite inférieure et la zone d'échange de chaleur et s'étendant depuis l'entrée d'alimentation dans la direction transversale permettant de recevoir l'alimentation depuis l'entrée d'alimentation et permettant une répartition uniforme de l'alimentation sur la zone d'échange de chaleur, et **caractérisé par**
une zone de transition séparant la zone d'échange de chaleur et le passage, la distance maximale entre des plaques d'échange de chaleur opposées dans la zone de transition étant inférieure à la distance maximale entre des plaques d'échange de chaleur opposées dans le passage et dans la zone d'échange de chaleur.

2. Échangeur de chaleur à plaques selon la revendication 1, dans lequel la distance maximale entre des plaques d'échange de chaleur opposées dans la zone de transition est comprise entre 10 % et 45 % de la distance maximale entre des plaques d'échange de chaleur opposées dans le passage.

3. Échangeur de chaleur à plaques selon l'une quelconque des revendications précédentes, dans lequel les crêtes et les vallées de plaques d'échange de chaleur opposées forment un motif en forme de croix dans la zone d'échange de chaleur.

4. Échangeur de chaleur à plaques selon l'une quelconque des revendications précédentes, dans lequel la distance maximale entre des plaques d'échange de chaleur opposées est sensiblement égale dans le passage et dans les vallées opposées de la zone d'échange de chaleur.

5. Échangeur de chaleur à plaques selon l'une quelconque des revendications précédentes, dans lequel le passage s'étend sensiblement entre la première limite latérale et la seconde limite latérale.

6. Échangeur de chaleur à plaques selon l'une quelconque des revendications précédentes, dans lequel au moins un du premier et du second interstice de plaque comprend une première section de condensation, agencée de façon à permettre une condensation d'au moins une partie de l'alimentation évaporée.

7. Échangeur de chaleur à plaques selon l'une quelconque des revendications précédentes, dans lequel la largeur maximale du passage est au moins égale à la distance maximale entre des plaques d'échange de chaleur opposées au niveau du passage.

8. Échangeur de chaleur à plaques selon l'une quelconque des revendications précédentes, dans lequel la section d'évaporation dans le premier interstice de plaque fait face à une seconde section de condensation dans le second interstice de plaque.

9. Échangeur de chaleur à plaques selon la revendication 8, dans lequel la seconde section de condensation dans le second interstice de plaque définit une sortie de condensat située sous l'entrée d'alimentation de la section d'évaporation dans le premier interstice de plaque, le passage définissant une zone d'écoulement croisé située entre la section d'évaporation dans le premier interstice de plaque et la sortie de condensat dans le second interstice de plaque, la distance maximale entre des plaques d'échange de chaleur opposées dans le passage étant inférieure dans la zone d'écoulement croisé par rapport à l'extérieur de la zone d'écoulement croisé.

10. Échangeur de chaleur à plaques selon la revendication 9, dans lequel la distance maximale entre des plaques d'échange de chaleur opposées dans la zone d'écoulement croisé représente environ 40 % à 60 %, comme par exemple 50 %, de la distance maximale entre des plaques d'échange opposées dans le passage hors de la zone d'écoulement croisé.

11. Échangeur de chaleur à plaques selon l'une quelconque des revendications 9 à 10, dans lequel la largeur du passage hors de la zone d'écoulement croisé représente environ 20 % à 80 %, comme par exemple 50 %, de la largeur de la zone d'écoulement croisé.

12. Échangeur de chaleur à plaques selon l'une quelconque des revendications 9 à 11, dans lequel la largeur de la zone d'écoulement croisé représente environ ¼ à ¾, comme par exemple ½, de la longueur de la zone d'écoulement croisé.

13. Échangeur de chaleur à plaques selon l'une quelconque des revendications précédentes, dans lequel la limite inférieure et les limites latérales de la section d'évaporation sont scellées par un joint.

14. Échangeur de chaleur à plaques selon l'une quelconque des revendications précédentes, dans lequel l'entrée d'alimentation est située centralement dans l'ensemble de plaques.

15. Plaque pour un échangeur de chaleur à plaques pour le traitement d'une alimentation, la plaque définissant une section d'évaporation pour permettre l'évaporation de l'alimentation, la section d'évaporation s'étendant dans une direction longitudinale entre une limite supérieure, qui relie de manière fluidique la section d'évaporation à une première section de séparation, et une limite inférieure, au niveau de laquelle des plaques d'échange de chaleur opposées sont scellées ensemble, la section d'évaporation s'étendant en outre dans une direction transversale entre une première limite latérale et une seconde limite latérale, limites latérales au niveau desquelles des plaques d'échange de chaleur opposées sont scellées ensemble, la section d'évaporation définissant :
une entrée d'alimentation située de manière adjacente à la limite inférieure pour introduire l'alimentation sous forme liquide dans la section d'évaporation,
une zone d'échange de chaleur adjacente à la limite supérieure, la zone d'échange de chaleur étant formée de crêtes et de vallées dans la plaque d'échange de chaleur qui sont agencées de sorte que, lorsqu'elles sont agencées à l'opposé d'une plaque identique qui a été retournée autour de la direction longitudinale, des crêtes opposées des plaques d'échange de chaleur opposées viendront en butée les unes contre les autres et formeront un motif en forme de croix,
un passage situé entre la limite inférieure et la zone d'échange de chaleur et s'étendant depuis l'entrée d'alimentation dans la direction transversale permettant de recevoir l'alimentation de l'entrée d'alimentation et permettant une distribution uniforme de l'alimentation sur la zone d'échange de chaleur, et **caractérisée par**
une zone de transition séparant la zone d'échange de chaleur et le passage, la profondeur de pression maximale de la plaque dans la zone de transition étant inférieure à la profondeur de pression maximale de la plaque dans le passage et dans la zone d'échange de chaleur.
